# EUROPEAN PATENT APPLICATION

(11) **EP 4 582 285 A1**
(43) Date of publication of application: **09.07.2025**
(21) Application number: 24218092.5
(22) Date of filing: 06.12.2024
(51) Int. Cl.: B60L 1/02, B60L 15/00, B60L 53/24

(54) **DRIVE DEVICE**

(30) Priority: 26.12.2023 JP 2023219577
(71) Applicant: TOYOTA JIDOSHA KABUSHIKI KAISHA, Aichi-ken, 471-8571 (JP)
(72) Inventor: MASUDA, Yuto, TOYOTA-SHI, AICHI-KEN, 471-8571 (JP); OKUDA, Koichi, TOYOTA-SHI, AICHI-KEN, 471-8571 (JP); NAKAGAMI, Soma, TOYOTA-SHI, AICHI-KEN, 471-8571 (JP)
(74) Representative: Cabinet Beau de Loménie

(57) **Abstract**

A drive device (20) includes: a first drive unit (50R) that includes a first electric motor (52R); a second drive unit (50L); a casing (21); a first power conversion unit; a charging unit (40) that applies a current to the first power conversion unit via a neutral point (NP1) of the first electric motor (52R); and a functional part. The first and second drive units (50R, 50L) are disposed on respective sides of a reference plane (BP) of the casing (21) in the vehicle right-left direction. The center of gravity of the charging unit (40) is located on the first direction side from the reference plane (BP) in the vehicle right-left direction. The center of gravity of the entire functional part is located on the second direction side from the reference plane (BP) in the vehicle right-left direction.

## Description

### BACKGROUND OF THE INVENTION

### 1. Field of the Invention

The technology disclosed herein relates to a drive device.

### 2. Description of Related Art

Japanese Unexamined Patent Application Publication No. 2016-205444 (JP 2016-205444 A) discloses a drive device that includes speed reducers housed in a casing in the state of being arranged in parallel on the right and left, and electric motors disposed on both the right and left sides of the speed reducers. Japanese Unexamined Patent Application Publication No. 2009-118659 (JP 2009-118659 A) discloses a technology in which two electric motors that drive drive wheels are used to charge a power storage device. In the technology according to JP 2009-118659 A, power of a charging device that is external to a vehicle is supplied to the power storage device via a neutral point of one of the two electric motors.

### SUMMARY OF THE INVENTION

In the drive device according to JP 2016-205444 A, the two speed reducers are disposed on respective sides of a reference plane of the casing that is perpendicular to the right-left direction. Similarly, the two electric motors are disposed on respective sides of the reference plane of the casing. Consequently, the center of gravity of the drive device is brought closer to the reference plane of the casing, improving the stability of the drive device during drive. In a configuration in which power of a charging device outside a vehicle is supplied to a power storage device via the neutral point of one of two electric motors as in JP 2009-118659 A, a charging unit electrically connected to the neutral point of the one electric motor is occasionally disposed on one side of the reference plane of the casing. In this case, the center of gravity of the drive device may be significantly shifted to the charging unit side with respect to the reference plane. As a result, the stability of the drive device during drive may be degraded. The present specification provides a technology capable of suppressing a significant shift of the center of gravity of a drive device that includes a charging unit to the charging unit side.

An aspect of the technology disclosed herein provides a drive device configured to drive a pair of right and left wheels mounted on a vehicle. The drive device includes: a first drive unit including a first electric motor and configured to drive a first wheel of the right and left wheels; a second drive unit including a second electric motor and configured to drive a second wheel of the right and left wheels; a casing that houses the first drive unit and the second drive unit; a first power conversion unit electrically connected to the first electric motor; a charging unit electrically connected to a neutral point of the first electric motor and configured to apply a current to the first power conversion unit via the neutral point; and one or more functional parts configured to provide a predetermined function to at least one of the first drive unit and the second drive unit. The first drive unit and the second drive unit are disposed on respective sides of a reference plane of the casing that is perpendicular to a vehicle right-left direction. A center of gravity of the charging unit is located on a first direction side in the vehicle right-left direction from the reference plane. A center of gravity of an entirety of the one or more functional parts is located on a second direction side in the vehicle right-left direction from the reference plane.

In the drive device discussed above, the center of gravity of the charging unit is located on the first direction side from the reference plane in the vehicle right-left direction, and the center of gravity of the entirety of the one or more functional parts is located on the second direction side from the reference plane in the vehicle right-left direction. Therefore, the difference in weight between both sides of the reference plane is reduced. This makes it possible to suppress a significant shift of the center of gravity of the drive device from the reference plane to the charging unit side due to the weight of the charging unit.

In an aspect of the present technology, the predetermined function may include a lock function configured to lock drive of either one of the first drive unit and the second drive unit. In that case, the one or more functional parts may include a lock part configured to mechanically lock the one drive unit, and an actuator configured to cause the lock part to operate.

In such a configuration, it is possible to suppress a shift of the center of gravity of the drive device from the reference plane to the first direction side using the weights of the lock part and the actuator required for the vehicle, even if the charging unit is disposed on the first direction side from the reference plane.

In an aspect of the present technology, the one drive unit may be a drive unit located on the second direction side from the reference plane in the vehicle right-left direction. In that case, a center of gravity of the lock part and a center of gravity of the actuator are both located on the second direction side from the reference plane in the vehicle right-left direction.

In such a configuration, the centers of gravity of the lock part that locks drive of the drive unit located on the second direction side and the actuator are disposed on the second direction side from the reference plane. Therefore, the lock part and the actuator can be disposed close to the corresponding drive unit, simplifying the configuration of the lock part and the actuator.

In an aspect of the present technology, the one drive unit may be a drive unit located on the first direction side from the reference plane in the vehicle right-left direction. In that case, a center of gravity of the lock part may be located on the first direction side from the reference plane in the vehicle right-left direction, and a center of gravity of the actuator may be located on the second direction side from the reference plane in the vehicle right-left direction. Further, the actuator may have a greater weight than a weight of the lock part.

In such a configuration, it is possible to suppress a shift of the center of gravity of the drive device to the first direction side from the reference plane using the weight of the actuator that is greater than the weight of the lock part.

In an aspect of the present technology, the predetermined function may include a supply function configured to supply a heat medium to at least one of the first drive unit and the second drive unit. In that case, the one or more functional parts may include one or more supply units that supply the heat medium to the at least one drive unit.

In such a configuration, it is possible to suppress a shift of the center of gravity of the drive device from the reference plane to the first direction side using the weight of the supply unit that is used to supply the heat medium to the at least one drive unit, even if the charging unit is disposed on the first direction side from the reference plane.

In an aspect of the present technology, the at least one drive unit may be a drive unit located on the second direction side from the reference plane in the vehicle right-left direction.

In such a configuration, the center of gravity of the supply unit that supplies the heat medium to the drive unit located on the second direction side is disposed on the second direction side from the reference plane. Therefore, the supply unit can be disposed close to the corresponding drive unit, simplifying the configuration of the supply unit.

In an aspect of the present technology, the predetermined function may include a supply function configured to supply the heat medium to both the first drive unit and the second drive unit. In that case, the one or more supply units may include a first supply unit configured to provide the supply function to the first drive unit, and a second supply unit configured to provide the supply function to the second drive unit. Further, a center of gravity of the first supply unit may be located on the first direction side from the reference plane in the vehicle right-left direction, and a center of gravity of the second supply unit may be located on the second direction side from the reference plane in the vehicle right-left direction. In that case, a distance between the center of gravity of the first supply unit and the reference plane may be less than a distance between the center of gravity of the second supply unit and the reference plane.

In such a configuration, the center of gravity of the entirety of the first supply unit and the second supply unit is located on the second direction side from the reference plane in the vehicle right-left direction. This makes it possible to suppress a shift of the center of gravity of the drive device to the first direction side from the reference plane.

In an aspect of the present technology, the predetermined function may include a supply function configured to supply the heat medium to both the first drive unit and the second drive unit. In that case, the one or more supply units may include a first supply unit configured to provide the supply function to the first drive unit, and a second supply unit configured to provide the supply function to the second drive unit. Further, a center of gravity of the first supply unit and a center of gravity of the second supply unit may be both located on the second direction side from the reference plane in the vehicle right-left direction.

In such a configuration, not only the center of gravity of the second supply unit that supplies the heat medium to the second drive unit, but also the center of gravity of the first supply unit that supplies the heat medium to the first drive unit is disposed on the second direction side from the reference plane, suppressing a shift of the center of gravity of the drive device to the first direction side from the reference plane using the two supply units.

In an aspect of the present technology, the first drive unit may be located on the first direction side from the reference plane in the vehicle right-left direction. In another aspect, however, the first drive unit may be located on the second direction side from the reference plane.

In an aspect of the present technology, the charging unit may include a capacitor. A capacitor has a relatively large weight. Therefore, the center of gravity of the drive device tends to be shifted to the first direction side if the charging unit including a capacitor is disposed on the first direction side from the reference plane. Therefore, the present technology is especially advantageous when the charging unit is configured to include a capacitor.

In an aspect of the present technology, the drive device may further include a second power conversion unit electrically connected to the second electric motor. In another aspect, however, the drive device may not include the second power conversion unit.

Details and further improvements of the technology disclosed herein will be described in the "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram of an electrified vehicle that includes a drive device 20 according to a first embodiment;
FIG. 2 is a sectional view of the drive device 20 taken along the line II-II in FIG. 1;
FIG. 3 is a circuit diagram of the drive device 20 according to the first embodiment;
FIG. 4 is a sectional view, similar to FIG. 2, of a drive device 20 according to a second embodiment;
FIG. 5 is a sectional view, similar to FIG. 2, of a drive device 20 according to a third embodiment;
FIG. 6 is a sectional view, similar to FIG. 2, of a drive device 20 according to a fourth embodiment; and
FIG. 7 is a sectional view, similar to FIG. 2, of a drive device 20 according to a fifth embodiment.

### DETAILED DESCRIPTION OF EMBODIMENTS

### First Embodiment

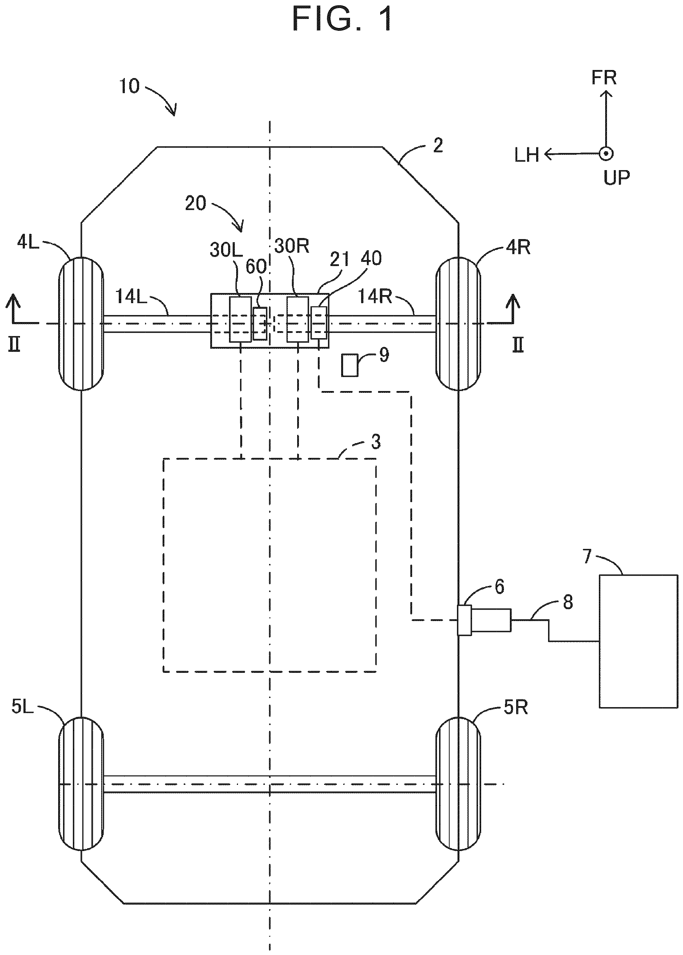

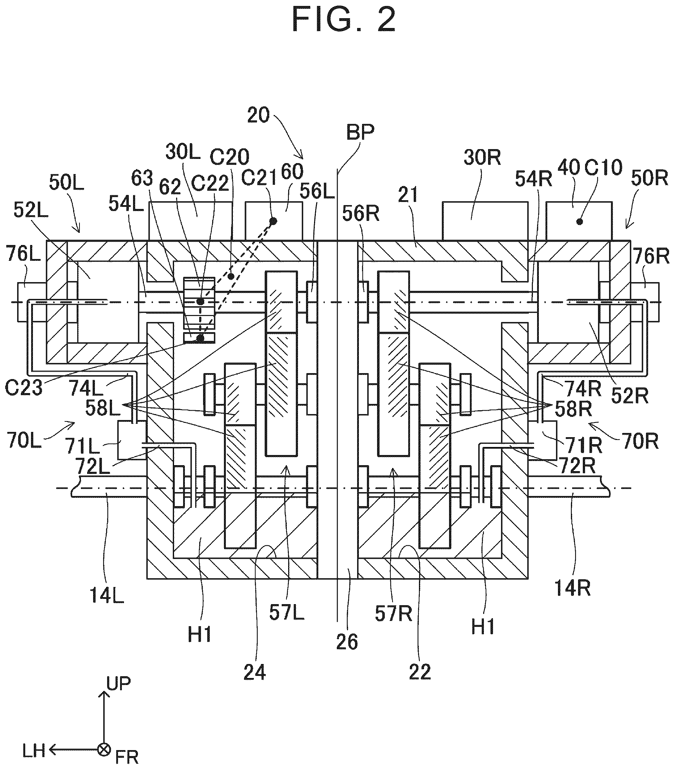

FIG. 1 is a block diagram, seen from above, of an electrified vehicle 10 that includes a drive device 20 according to the present embodiment. FIG. 2 is a sectional view of the drive device 20 taken along the line II-II in FIG. 1. Herein, the front side of the electrified vehicle 10 (i.e., the upper side on the sheet surface of FIG. 1) may be simply referred to as the "front", and the opposite side may be simply referred to as the "rear". Furthermore, the left side of the electrified vehicle 10 (i.e., the left side on the sheet surface of FIG. 1) may be simply referred to as the "left", and the opposite side may be simply referred to as the "right".

As illustrated in FIG. 1, the electrified vehicle 10 includes a vehicle body 2, a battery pack 3, a pair of right and left front wheels 4R, 4L, a pair of right and left drive shafts 14R, 14L, a pair of right and left rear wheels 5R, 5L, a charging inlet 6, a parking brake 9, and a drive device 20. The electrified vehicle 10 travels by driving the right and left front wheels 4R, 4L using the drive device 20. In a modification, the drive device 20 may drive the right and left rear wheels 5R, 5L. The term "electrified vehicle" as used herein means a vehicle including a rechargeable battery electric vehicle to be charged by an external power source, a fuel cell electric vehicle that includes a fuel cell as a power source, and a hybrid electric vehicle that also includes an engine, for example. Hereinafter, the expression "pair of right and left" may be replaced with a simple expression "pair of."

The charging inlet 6 is disposed on the right side surface of the vehicle body 2. The charging inlet 6 is configured to be connected to an external direct-current power source 7 (e.g., a charging stand) via a power cable 8.

As particularly illustrated in FIG. 2, the drive device 20 includes a casing 21, a first inverter 30R, a second inverter 30L, a charging unit 40, a first drive unit 50R, a second drive unit 50L, an actuator 60, a parking gear 62, a lock pawl 63, a first supply unit 70R, and a second supply unit 70L. In the drive device 20, the inverters 30R, 30L, the charging unit 40, the drive units 50R, 50L, the actuator 60, the parking gear 62, the lock pawl 63, and the supply units 70R, 70L are housed in or integrally fixed to the casing 21. The drive device 20 is a so-called integrated electromechanical unit called "X-in-1". The casing 21 houses the drive units 50R, 50L together with a heat medium H1. The casing 21 includes a first unit chamber 22, a second unit chamber 24, and a partition wall 26. The first unit chamber 22 houses the first drive unit 50R, and the second unit chamber 24 houses the second drive unit 50L. The heat medium H1 is retained in the lower portions of the first unit chamber 22 and the second unit chamber 24.

The partition wall 26 is interposed between the first unit chamber 22 and the second unit chamber 24. The partition wall 26 extends in the up-down direction at the central portion of the casing 21 in the right-left direction. That is, the partition wall 26 extends in a direction perpendicular to the right-left direction. In the present embodiment, a plane that extends along the center of the partition wall 26 in the right-left direction is defined as a reference plane BP of the casing 21.

Of the drive shafts 14R, 14L, the right drive shaft 14R mechanically connects the right front wheel 4R, as one (first wheel) of the front wheels 4R, 4L, and the drive device 20. Of the drive shafts 14R, 14L, the left drive shaft 14L mechanically connects the left front wheel 4L, as the other (second wheel) of the front wheels 4R, 4L, and the drive device 20.

The first drive unit 50R drives the right front wheel 4R via the right drive shaft 14R. The first drive unit 50R includes a first electric motor 52R and a first gear mechanism 57R. The second drive unit 50L drives the left front wheel 4L via the left drive shaft 14L. The second drive unit 50L includes a second electric motor 52L and a second gear mechanism 57L. The first drive unit 50R is located on one side (first direction side, right side) with respect to the reference plane BP of the partition wall 26, and the second drive unit 50L is located on the other side (second direction side, left side) with respect to the reference plane BP. That is, the first drive unit 50R and the second drive unit 50L are disposed on respective sides of the reference plane BP. The first drive unit 50R and the second drive unit 50L may be disposed laterally symmetrically with respect to the reference plane BP. This allows a mechanism that transfers power of the first drive unit 50R to the right front wheel 4R and a mechanism that transfers power of the second drive unit 50L to the left front wheel 4L to be disposed in a well balanced manner on respective sides of the reference plane BP, making it easy to improve the stability of the drive device 20 during drive.

The first electric motor 52R is a prime mover that drives the right front wheel 4R. The first electric motor 52R is mechanically connected to the right front wheel 4R via the first gear mechanism 57R and the right drive shaft 14R. The second electric motor 52L is a prime mover that drives the left front wheel 4L. The second electric motor 52L is mechanically connected to the left front wheel 4L via the second gear mechanism 57L and the left drive shaft 14L. That is, the drive device 20 according to the present embodiment drives the front wheels 4R, 4L independently using the two electric motors 52R, 52L, respectively.

The first gear mechanism 57R is interposed between the first electric motor 52R and the right drive shaft 14R. The first gear mechanism 57R includes a plurality of gears 58R, a plurality of rotary shafts 54R, and a plurality of bearings 56R. The gears 58R are engaged in series to transfer torque between the first electric motor 52R and the right front wheel 4R. Each of the rotary shafts 54R holds at least one gear 58R, and is rotatably supported on the casing 21 by two or more bearings 56R. The first gear mechanism 57R may be a speed reducer configured to transfer torque output from the first electric motor 52R to the right front wheel 4R while amplifying the torque, although this is not particularly limiting.

The second gear mechanism 57L is interposed between the second electric motor 52L and the left drive shaft 14L. The second gear mechanism 57L includes a plurality of gears 58L, a plurality of rotary shafts 54L, and a plurality of bearings 56L. The gears 58L are engaged in series to transfer torque between the second electric motor 52L and the left front wheel 4L. Each of the rotary shafts 54L holds at least one gear 58L, and is rotatably supported on the casing 21 by two or more bearings 56L. The second gear mechanism 57L may be a speed reducer configured to transfer torque output from the second electric motor 52L to the left front wheel 4L while amplifying the torque, although this is not particularly limiting.

The first supply unit 70R is located on the right side surface of the casing 21. The first supply unit 70R includes an upstream pipe 72R, a first oil pump 71R, a downstream pipe 74R, and a first oil cooler 76R. The first oil pump 71R sucks the heat medium H1 retained in the lower portion of the first unit chamber 22 of the casing 21 via the upstream pipe 72R, and pumps the heat medium H1 to the downstream pipe 74R. This allows the heat medium H1 to pass inside the first oil cooler 76R to be supplied to the first electric motor 52R. Further, after passing through the first electric motor 52R, the heat medium H1 passes on the surface of the first gear mechanism 57R to be retained in the lower portion of the first unit chamber 22 again.

The second supply unit 70L is located on the left side surface of the casing 21. That is, the second supply unit 70L is located on the left side of the reference plane BP. The second supply unit 70L includes an upstream pipe 72L, a second oil pump 71L, a downstream pipe 74L, and a second oil cooler 76L. The second oil pump 71L sucks the heat medium H1 retained in the lower portion of the second unit chamber 24 of the casing 21 via the upstream pipe 72L, and pumps the heat medium H1 to the downstream pipe 74L. This allows the heat medium H1 to pass inside the second oil cooler 76L to be supplied to the second electric motor 52L. Further, after passing through the second electric motor 52L, the heat medium H1 passes on the surface of the second gear mechanism 57L to be retained in the lower portion of the second unit chamber 24 again. In this manner, the supply units 70R, 70L circulate the heat medium H1 into the casing 21. The heat medium H1 may be oil that functions as a lubricant for the gear mechanisms 57R, 57L, for example. A different heat medium cooled by a radiator (not illustrated) of the electrified vehicle 10 is circulated to the oil coolers 76R, 76L. Therefore, the heat medium H1 passing through the oil coolers 76R, 76L also functions as a cooling medium that cools the electric motors 52R, 52L, for example.

The first inverter 30R, the second inverter 30L, the charging unit 40, and the actuator 60 are disposed on the upper surface of the casing 21.

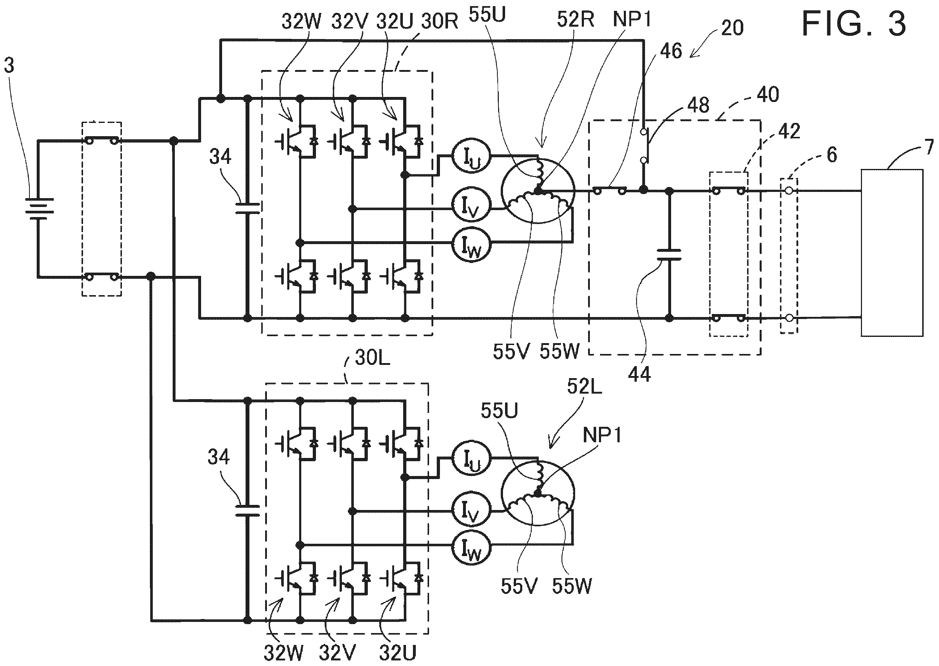

FIG. 3 is a circuit diagram of the drive device 20. The first electric motor 52R is a three-phase motor that includes a U-phase coil 55U, a V-phase coil 55V, and a W-phase coil 55W. The second electric motor 52L has the same configuration as the first electric motor 52R. That is, the second electric motor 52L is a three-phase motor that includes a U-phase coil 55U, a V-phase coil 55V, and a W-phase coil 55W.

The first inverter 30R is electrically connected between the first electric motor 52R and a smoothing capacitor 34 for travel. The first inverter 30R includes a U-phase arm 32U, a V-phase arm 32V, and a W-phase arm 32W. The arms 32U, 32V, 32W are connected in parallel with each other. The arms 32U, 32V, 32W each include two switching elements connected in series. The second inverter 30L has the same configuration as the first inverter 30R. That is, the second inverter 30L also includes a U-phase arm 32U, a V-phase arm 32V, and a W-phase arm 32W.

One end of each of the U-phase coil 55U, the V-phase coil 55V, and the W-phase coil 55W of the first electric motor 52R is connected to a neutral point NP1. The other end of the U-phase coil 55U of the first electric motor 52R is connected to the U-phase arm 32U of the first inverter 30R via a current sensor. Similarly, the other end of the V-phase coil 55V of the first electric motor 52R is connected to the V-phase arm 32V of the first inverter 30R via a current sensor, and the other end of the W-phase coil 55W is connected to the W-phase arm 32W of the first inverter 30R via a current sensor. The coils 55U, 55V, 55W of the second electric motor 52L are similarly connected to the arms 32U, 32V, 32W, respectively, of the second inverter 30L.

The charging unit 40 is electrically connected between the charging inlet 6 and the first electric motor 52R. More specifically, the charging unit 40 electrically connects one terminal of the charging inlet 6 and the neutral point NP1 of the first electric motor 52R, and connects the other terminal of the charging inlet 6 and the battery pack 3. In this manner, the drive device 20 according to the present embodiment constitutes a part of a circuit that connects the external direct-current power source 7 and the battery pack 3 using the first electric motor 52R, the first inverter 30R, and the charging unit 40. The charging unit 40 includes a first main relay 42, a capacitor 44, a first charging relay 46, and a bypass relay 48.

The first main relay 42 of the charging unit 40 is electrically connected between the first electric motor 52R and the charging inlet 6. The first main relay 42 is a switch that switches the electrical connection between the drive device 20 and the external direct-current power source 7. The first charging relay 46 is electrically connected between the neutral point NP1 of the first electric motor 52R and the first main relay 42. The first charging relay 46 is a switch that switches the electrical connection between the neutral point NP1 and the external direct-current power source 7. The bypass relay 48 is electrically connected between the battery pack 3 and the first main relay 42. The bypass relay 48 is a switch that directly electrically connects the battery pack 3 and the external direct-current power source 7 by bypassing the first electric motor 52R and the first inverter 30R. The relays 42, 46, 48 of the charging unit 40 are connected so as to be communicable with a control device (not illustrated) for the electrified vehicle 10.

When the first main relay 42 and the first charging relay 46 are turned on and the bypass relay 48 is turned off with the charging inlet 6 connected to the external direct-current power source 7, a charging current from the external direct-current power source 7 is supplied to the battery pack 3 via the neutral point NP1 of the first electric motor 52R. This allows the first electric motor 52R and the first inverter 30R to function as three booster circuits connected in parallel between the charging inlet 6 and the battery pack 3. This allows the drive device 20 to boost the output voltage of the external direct-current power source 7 using the first electric motor 52R and the first inverter 30R. This allows rapid charging to be executed when the output voltage of the external direct-current power source 7 is lower than the voltage of the battery pack 3. In this manner, the charging unit 40 is connected to the neutral point NP1 of the first electric motor 52R, and applies a charging current to the first inverter 30R via the neutral point NP1.

When the first main relay 42 and the bypass relay 48 are turned on and the first charging relay 46 is turned off with the charging inlet 6 connected to the external direct-current power source 7, a charging current from the external direct-current power source 7 is directly supplied to the battery pack 3, not via the neutral point NP1 of the first electric motor 52R. This allows a charging current to be supplied to the battery pack 3 without boosting the output voltage of the external direct-current power source 7 when the output voltage of the external direct-current power source 7 is equivalent to the voltage of the battery pack 3.

In the present embodiment, as illustrated in FIG. 2, the first inverter 30R is located on the right side of the reference plane BP of the casing 21, and the second inverter 30L is located on the left side of the reference plane BP. That is, the first inverter 30R and the second inverter 30L are disposed on respective sides of the reference plane BP. The first inverter 30R and the second inverter 30L may be disposed laterally symmetrically with respect to the reference plane BP. This allows the center of gravity of the first inverter 30R and the second inverter 30L to be easily brought closer to the reference plane BP. The charging unit 40 is disposed on the right side of the reference plane BP. A center of gravity C10 of the charging unit 40 is located on the right side of the reference plane BP. On the contrary, the actuator 60 is disposed on the left side of the reference plane BP. The actuator 60 is a device that moves the lock pawl 63 upward, the lock pawl 63 being disposed below a motor shaft that extends rightward from the second electric motor 52L, among the rotary shafts 54L. The lock pawl 63 locks rotation of the parking gear 62 disposed on the motor shaft, by moving upward to be meshed with the parking gear 62. That is, the parking gear 62 and the lock pawl 63 lock drive of the second drive unit 50L. For example, the actuator 60 moves the lock pawl 63 upward according to an operation of the parking brake 9 (see FIG. 1) of the electrified vehicle 10. Consequently, drive of the second drive unit 50L is locked.

A center of gravity C20 of the entirety of the actuator 60, the parking gear 62, and the lock pawl 63 is located inside a triangle formed by connecting a center of gravity C21 of the actuator 60, a center of gravity C22 of the parking gear 62, and a center of gravity C23 of the lock pawl 63. As discussed earlier, the actuator 60 is located on the left side of the reference plane BP, and the parking gear 62 and the lock pawl 63 are disposed on the motor shaft of the second drive unit 50L located on the left side of the reference plane BP. That is, the center of gravity C20 of the entirety of the actuator 60, the parking gear 62, and the lock pawl 63 is located on the left side of the reference plane BP.

### Effects of Present Embodiment

In the drive device 20 according to the present embodiment, as described above, the center of gravity C10 of the charging unit 40 is located on the right side of the reference plane BP, and the center of gravity C20 of the entirety of the actuator 60, the parking gear 62, and the lock pawl 63 to lock drive of the second drive unit 50L is located on the left side of the reference plane BP. That is, in the present embodiment, the number of parts disposed on the left side of the reference plane BP is larger than the number of parts disposed on the right side of the reference plane BP on which the charging unit 40 is located. As a result, the difference in weight between both sides of the reference plane BP is reduced. Consequently, a significant shift of the center of gravity of the entire drive device 20 to the charging unit 40 side due to the weights of the actuator 60, the parking gear 62, and the lock pawl 63 is suppressed, even if the charging unit 40 that is used to charge the battery pack 3 is disposed on the right side of the reference plane BP. As a result, the stability of the drive device 20 during drive can be improved. The actuator 60, the parking gear 62, and the lock pawl 63 are parts required for travel of the electrified vehicle 10. Therefore, it is possible to adjust the weight balance of the entire drive device 20 with high mass efficiency by bringing the center of gravity of the entire drive device 20 closer to the reference plane BP using the actuator 60, the parking gear 62, and the lock pawl 63, compared to a configuration in which another part is provided to adjust the weight balance of the entire drive device 20, for example. Further, the weight balance of the drive device 20 can be easily adjusted by bringing the center of gravity of the entire drive device 20 closer to the reference plane BP. Therefore, the drive device 20 according to the present embodiment can be adopted, irrespective of whether a driver's seat of the electrified vehicle 10 is on the right side or the left side, for example. That is, the drive device 20 can be easily adopted, irrespective of the position of the center of gravity of the entire electrified vehicle on which the drive device 20 is mounted.

### Correspondence

The first inverter 30R is an example of the "first power conversion unit", and the second inverter 30L is an example of the "second power conversion unit". The parking gear 62 and the lock pawl 63 are examples of the "lock part".

### Second Embodiment

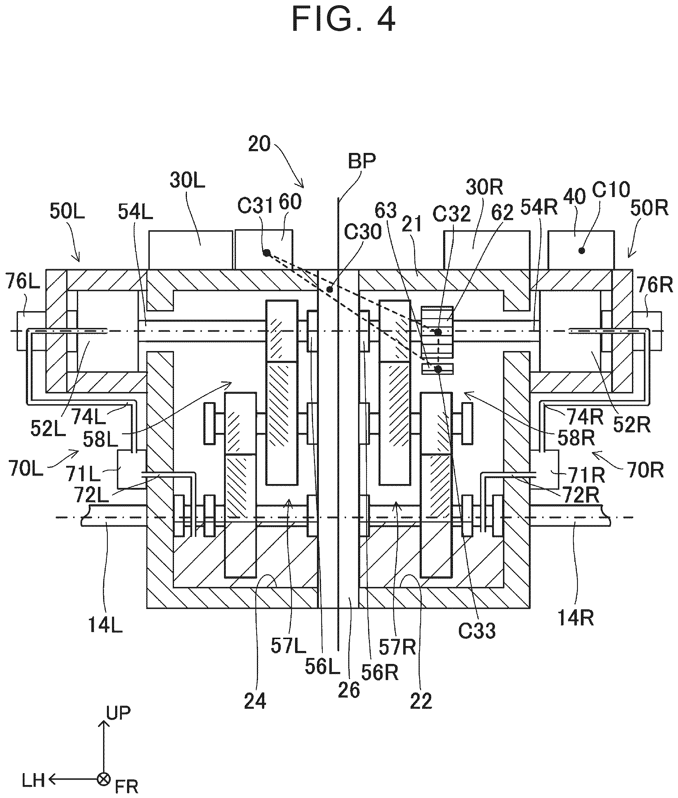

A drive device 20 according to a second embodiment will be described with reference to FIG. 4. In the drive device 20 according to the present embodiment, unlike the drive device 20 according to the first embodiment discussed above, the parking gear 62 and the lock pawl 63 are disposed on a motor shaft of the first drive unit 50R. That is, in the present embodiment, the parking gear 62 and the lock pawl 63 lock drive of the first drive unit 50R located on the right side of the reference plane BP, the same side as the charging unit 40. The drive device 20 according to the present embodiment is otherwise the same in configuration as the drive device 20 according to the first embodiment.

In the drive device 20 according to the present embodiment, the actuator 60 is located on the left side of the reference plane BP, as in the first embodiment. Here, the weight of the actuator 60 is greater than the total weight of the parking gear 62 and the lock pawl 63. For example, the weight of the actuator 60 is three to five times the total weight of the parking gear 62 and the lock pawl 63. Therefore, a center of gravity C30 of the entirety of the actuator 60, the parking gear 62, and the lock pawl 63 is located in the vicinity of the actuator 60 in a triangle formed by connecting a center of gravity C31 of the actuator 60, a center of gravity C32 of the parking gear 62, and a center of gravity C33 of the lock pawl 63. Consequently, the center of gravity C30 is located on the left side of the reference plane BP. In the drive device 20 according to the present embodiment, a significant shift of the center of gravity of the entire drive device 20 to the charging unit 40 side is suppressed by disposing the actuator 60 with a heavy weight on the left side of the reference plane BP.

### Third Embodiment

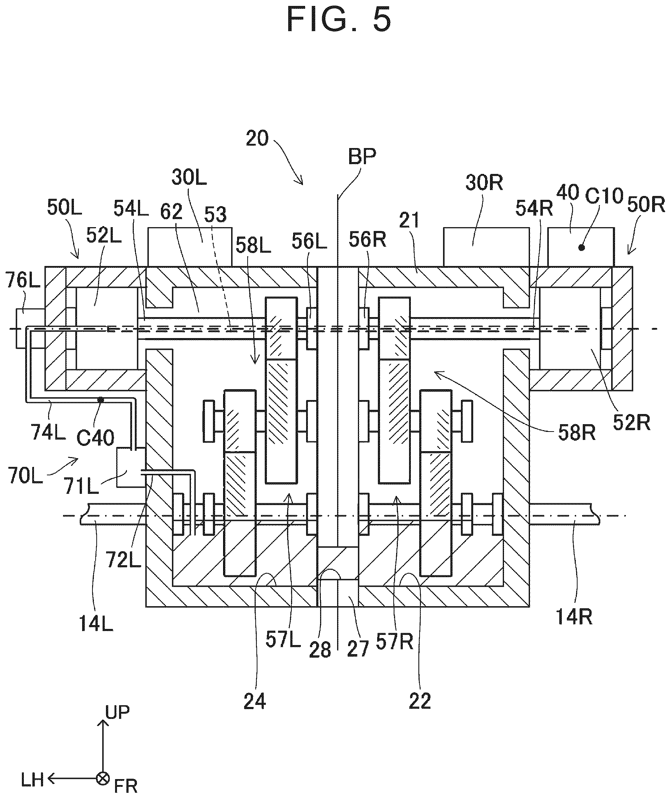

A drive device 20 according to a third embodiment will be described with reference to FIG. 5. The drive device 20 according to the present embodiment basically has the same configuration as the drive device 20 according to the first embodiment discussed above, but does not include the actuator 60, the parking gear 62, or the lock pawl 63. In the present embodiment, further, the first supply unit 70R (see FIG. 2) is not disposed on a side wall of the casing 21 on the right side. Further, a partition wall 27 of the casing 21 according to the present embodiment has a communication hole 28 that communicates between the lower portion of the first unit chamber 22 and the lower portion of the second unit chamber 24, unlike the partition wall 26 according to the first embodiment. This allows the heat medium H1 to move from the first unit chamber 22 to the second unit chamber 24, for example, via the communication hole 28.

The second supply unit 70L according to the present embodiment has the same configuration as the second supply unit 70L according to the first embodiment. In the present embodiment, however, the internal space of the motor shaft of the second electric motor 52L and the internal space of the motor shaft of the first electric motor 52R communicate with each other through a communication hole 53. Therefore, in the present embodiment, the heat medium H1 supplied from the second supply unit 70L to the second electric motor 52L is also supplied to the first electric motor 52R through the communication hole 53. That is, in the present embodiment, the heat medium H1 is supplied to the two drive units 50R, 50L by the sole second supply unit 70L.

In the drive device 20 according to the present embodiment, the second supply unit 70L is disposed on the left side of the reference plane BP, and no supply unit is disposed on the right side of the reference plane BP. Therefore, a center of gravity C40 of the entire second supply unit 70L is located on the left side of the reference plane BP. In the drive device 20 according to the present embodiment, a significant shift of the center of gravity of the entire drive device 20 to the charging unit 40 side is suppressed by disposing the sole second supply unit 70L on the left side of the reference plane BP.

### Fourth Embodiment

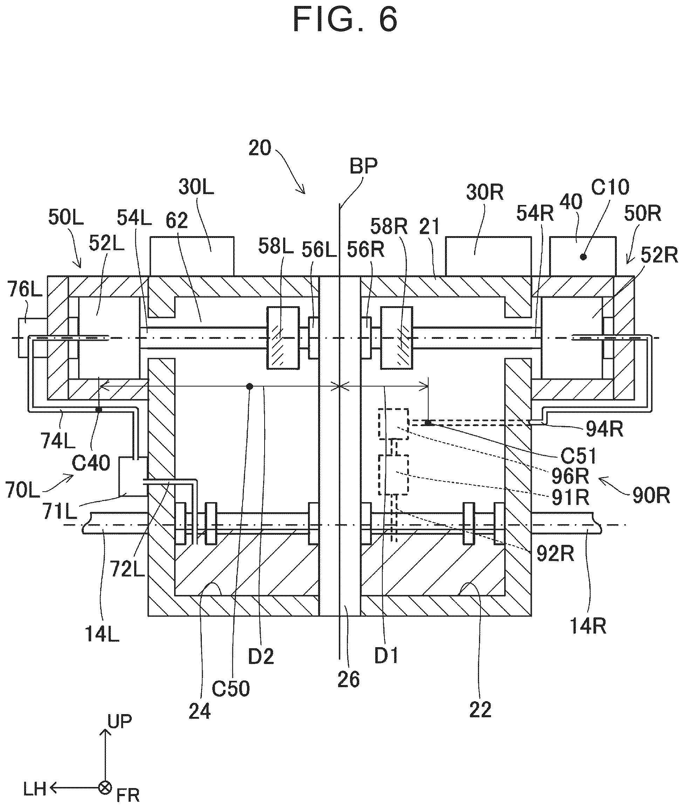

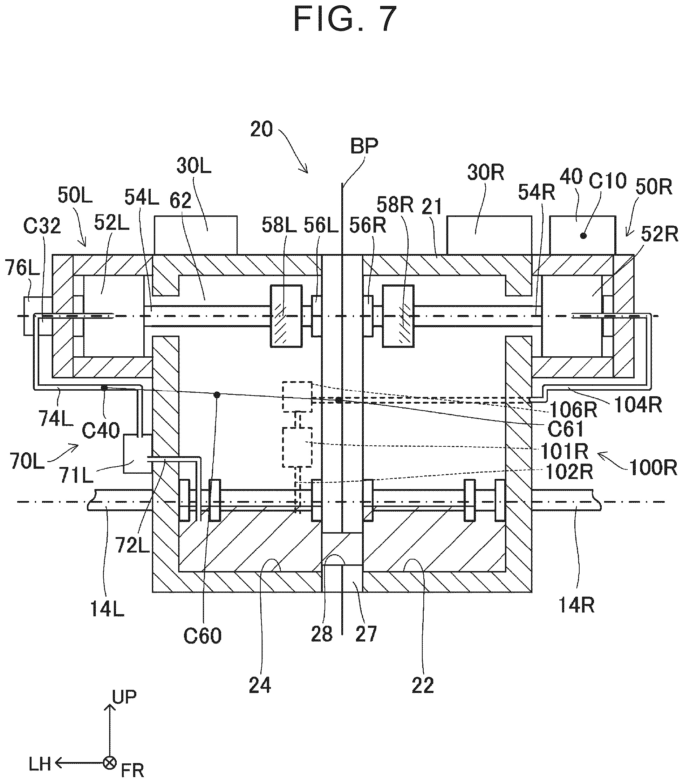

A drive device 20 according to a fourth embodiment will be described with reference to FIG. 6. In FIGS. 6 and 7, in order to facilitate understanding of the drawings, some of the gears 58R, 58L are not illustrated. However, the drive device 20 according to the present embodiment basically has the same configuration as the drive device 20 according to the first embodiment discussed above. The drive device 20 according to the present embodiment includes a first supply unit 90R and a second supply unit 70L, unlike the drive device 20 according to the third embodiment. The second supply unit 70L has the same configuration as the second supply unit 70L according to the first embodiment discussed above.

In the drive device 20 according to the present embodiment, a first oil pump 91R and a first oil cooler 96R of the first supply unit 90R that supplies the heat medium H1 to the first drive unit 50R are disposed on a side wall of the casing 21 on the front side (i.e., the back side of the sheet surface of FIG. 6), rather than on a side wall on the right side. The first oil pump 91R of the first supply unit 90R pumps the heat medium H1 sucked up via an upstream pipe 92R to a downstream pipe 94R via the first oil cooler 96R to be supplied to the first electric motor 52R. The downstream pipe 94R extends rightward along the side wall of the casing 21 on the front side, and penetrates the side wall of the casing 21 on the right side to be connected to the first electric motor 52R.

A center of gravity C51 of the entire first supply unit 90R is located on the right side of the reference plane BP, as with the charging unit 40. However, the first oil pump 91R and the first oil cooler 96R of the first supply unit 90R are disposed close to the reference plane BP, compared to the second oil pump 71L and the second oil cooler 76L of the second supply unit 70L. In other words, the first oil pump 91R and the first oil cooler 96R are disposed closer to the center of the casing 21 than the second oil pump 71L and the second oil cooler 76L. Therefore, a distance D1 between the center of gravity C51 of the entire first supply unit 90R and the reference plane BP is shorter than a distance D2 between the center of gravity C40 of the entire second supply unit 70L and the reference plane BP. Therefore, a center of gravity C50 of the entirety of the two supply units 90R, 70L is located on the left side of the reference plane BP. In the drive device 20 according to the present embodiment, a significant shift of the center of gravity of the entire drive device 20 to the charging unit 40 side is suppressed by disposing the first supply unit 90R closer to the reference plane BP, the first supply unit 90R being located on the right side of the reference plane BP as with the charging unit 40 and supplying the heat medium H1 to the first drive unit 50R. The weight balance of the entire drive device 20 can be adjusted by changing the arrangement of the first supply unit 90R and the second supply unit 70L having relatively close weights. The position of the center of gravity of the entire drive device 20 can be easily adjusted by changing the arrangement of the first supply unit 90R required for travel of the electrified vehicle 10. In the present embodiment, the first supply unit 90R and the second supply unit 70L are examples of the "functional part".

### Fifth Embodiment

A drive device 20 according to a fifth embodiment will be described with reference to FIG. 7. The drive device 20 according to the present embodiment basically has the same configuration as the drive device 20 according to the fourth embodiment. However, the partition wall 27 of the casing 21 has a communication hole 28 as in the third embodiment, and the arrangement of a first supply unit 100R is different from the fourth embodiment. Specifically, in the first supply unit 100R according to the present embodiment, a first oil pump 101R and a first oil cooler 106R are located on the left side of the reference plane BP. The first supply unit 100R includes two pipes 102R, 104R in addition to the first oil pump 101R and the first oil cooler 106R. However, the weights of the first oil pump 101R and the first oil cooler 106R are much greater than the weights of the two pipes 102R, 104R, and therefore a center of gravity C61 of the entire first supply unit 100R is located in the vicinity of the first oil pump 101R and the first oil cooler 106R. Therefore, in the present embodiment, the center of gravity C61 of the entire first supply unit 100R is located on the left side of the reference plane BP. A center of gravity C60 of the entirety of the two supply units 100R, 70L is located on the left side of the reference plane BP. In the drive device 20 according to the present embodiment, a significant shift of the center of gravity of the entire drive device 20 to the charging unit 40 side is suppressed by disposing the first supply unit 100R on the left side of the reference plane BP, the first supply unit 100R supplying the heat medium H1 to the first drive unit 50R. In the present embodiment, the first supply unit 100R is an example of the "functional part".

Although specific examples of the technology disclosed herein have been described in detail above, these are merely exemplary and are not intended to limit the scope of the claims. The technology described in the claims encompasses various modifications and alterations of the specific examples exemplified above. Modifications of the above embodiments will be described below.

In the embodiments discussed above, the parking gear 62, the lock pawl 63, the actuator 60, the first supply unit 90R, the second supply unit 70L, and the first supply unit 100R are each an example of the "functional part". However, the "functional part" is not limited thereto. The term "functional part" as used herein is a general term for parts that provide a predetermined function to at least one of the first drive unit 50R and the second drive unit 50L. For example, the "functional part" may include a "shift actuator" that changes gears during travel of the electrified vehicle 10. The "functional part" may include a part configured to be operable independently of the drive units 50R, 50L, excluding the inverters 30R, 30L and the charging unit 40. Further, the "functional part" may be disposed inside the casing 21, or may be disposed on the outer surface of the casing 21. The drive device 20 may not include the second inverter 30L.

While the charging unit 40 is located on the right side of the reference plane BP in the embodiments discussed above, the charging unit 40 may be located on the left side of the reference plane BP. In other words, the charging unit 40 may be located on the opposite side of a drive unit that is used to charge the battery pack 3. A part of the charging unit 40 may be exposed to the left side of the reference plane BP. It is only necessary that the center of gravity C10 of the charging unit 40 should be located on the right side of the reference plane BP.

In the drive device 20 according to the fifth embodiment, the first oil cooler 106R may be located on the left side of the reference plane BP, and the first oil pump 101R may be located on the right side of the reference plane BP, for example. In that case, the distance between the first oil cooler 106R and the reference plane BP may be greater than the distance between the first oil pump 101R and the reference plane BP. In still another modification, the first oil cooler 106R may be disposed on the right side of the reference plane BP, and the first oil pump 101R may be located on the left side of the reference plane BP.

The technical elements described in the present specification or the drawings exhibit technical utility alone or in various combinations, and are not limited to the combinations set forth in the claims as originally filed. The technology exemplified in the present specification or the drawings can achieve a plurality of objects at the same time, and has technical utility by achieving one of the objects itself.

## Claims

1. A drive device (20) configured to drive a pair of right and left wheels mounted on a vehicle, comprising:
a first drive unit (50R) including a first electric motor (52R) and configured to drive a first wheel of the right and left wheels;
a second drive unit (50L) including a second electric motor (52L) and configured to drive a second wheel of the right and left wheels;
a casing (21) that houses the first drive unit (50R) and the second drive unit (50L);
a first power conversion unit (30R) electrically connected to the first electric motor (52R);
a charging unit (40) electrically connected to a neutral point (NP1) of the first electric motor (52R) and configured to apply a current to the first power conversion unit (30R) via the neutral point (NP1); and
one or more functional parts (62, 63, 60, 90R, 70L, 100R) configured to provide a predetermined function to at least one of the first drive unit (50R) and the second drive unit (50L), wherein:
the first drive unit (50R) and the second drive unit (50L) are disposed on respective sides of a reference plane (BP) of the casing (21) that is perpendicular to a vehicle right-left direction;
a center of gravity (C10) of the charging unit (40) is located on a first direction side in the vehicle right-left direction from the reference plane (BP); and
a center of gravity of an entirety of the one or more functional parts (62, 63, 60, 90R, 70R, 70L, 100R) is located on a second direction side in the vehicle right-left direction from the reference plane (BP).

2. The drive device (20) according to claim 1, wherein:
the predetermined function includes a lock function configured to lock drive of either one of the first drive unit (50R) and the second drive unit (50L); and
the one or more functional parts (62, 63, 60, 90R, 70L, 100R) include
a lock part (62,63) configured to mechanically lock the one drive unit, and
an actuator (60) configured to cause the lock part (62,63) to operate.

3. The drive device (20) according to claim 2, wherein:
the one drive unit is a drive unit located on the second direction side from the reference plane (BP) in the vehicle right-left direction; and
a center of gravity of the lock part (62,63) and a center of gravity of the actuator (60) are both located on the second direction side from the reference plane (BP) in the vehicle right-left direction.

4. The drive device (20) according to claim 2, wherein:
the one drive unit is a drive unit located on the first direction side from the reference plane (BP) in the vehicle right-left direction;
a center of gravity of the lock part (62,63) is located on the first direction side from the reference plane (BP) in the vehicle right-left direction;
a center of gravity of the actuator (60) is located on the second direction side from the reference plane (BP) in the vehicle right-left direction; and
the actuator (60) has a greater weight than a weight of the lock part (62,63).

5. The drive device (20) according to claim 1, wherein:
the predetermined function includes a supply function configured to supply a heat medium (H1) to at least one of the first drive unit (50R) and the second drive unit (50L); and
the one or more functional parts (62, 63, 60, 90R, 70L, 100R) include one or more supply units (90R, 70L) that supply the heat medium (H1) to the at least one drive unit.

6. The drive device (20) according to claim 5, wherein the at least one drive unit is a drive unit located on the second direction side from the reference plane (BP) in the vehicle right-left direction.

7. The drive device (20) according to claim 5, wherein:
the predetermined function includes a supply function configured to supply the heat medium (H1) to both the first drive unit (50R) and the second drive unit (50L);
the one or more supply units (90R, 70L) include
a first supply unit (90R) configured to provide the supply function to the first drive unit (50R), and
a second supply unit (70L) configured to provide the supply function to the second drive unit (50L);
a center of gravity of the first supply unit (90R) is located on the first direction side from the reference plane (BP) in the vehicle right-left direction;
a center of gravity (C40) of the second supply unit (70L) is located on the second direction side from the reference plane (BP) in the vehicle right-left direction; and
a distance (D1) between the center of gravity of the first supply unit (90R) and the reference plane (BP) is less than a distance (D2) between the center of gravity (C40) of the second supply unit (70L) and the reference plane (BP).

8. The drive device (20) according to claim 5, wherein:
the predetermined function includes a supply function configured to supply the heat medium (H1) to both the first drive unit (50R) and the second drive unit (50L);
the one or more supply units (70R, 70L) include
a first supply unit (90R) configured to provide the supply function to the first drive unit (50R), and
a second supply unit (70L) configured to provide the supply function to the second drive unit (50L); and
a center of gravity (C51) of the first supply unit (90R) and a center of gravity (C40) of the second supply unit (70L) are both located on the second direction side from the reference plane (BP) in the vehicle right-left direction.

9. The drive device (20) according to claim 1, wherein the first drive unit (50R) is located on the first direction side from the reference plane (BP) in the vehicle right-left direction.

10. The drive device (20) according to any of claims 1 to 9, wherein the charging unit (40) includes a capacitor (44).

11. The drive device (20) according to any of claims 1 to 10, wherein the drive device (20) further includes a second power conversion unit (30L) electrically connected to the second electric motor (52L).
